# EUROPEAN PATENT SPECIFICATION

(11) **EP 1 251 977 B1**
(45) Date of publication and mention of the grant of the patent: **14.09.2005**
(21) Application number: 01901238.4
(22) Date of filing: 12.01.2001
(51) Int. Cl.: B21D 35/00, B21D 19/12

(54) **APPARATUS FOR CUTTING AND SHAPING SHEET METAL**
METALLBLECHSCHNEID- UND FORMVORRICHTUNG
APPAREIL DE COUPE ET DE MISE EN FORME DE FEUILLE METALLIQUE

(30) Priority: 12.01.2000 FI 20000015 U
(43) Date of publication of application: 30.10.2002
(73) Proprietor: Hyttinen, Matti, Kalevi, 53810 Lappeenranta (FI)
(72) Inventor: Hyttinen, Matti, Kalevi, 53810 Lappeenranta (FI)
(74) Representative: Helino, Timo Kalervo
(86) International application number: PCT/FI2001/000027
(87) International publication number: WO 2001/051230

(56) References cited:
- FR-A1- 2 632 217

## Description

The present invention relates to a sheet metal cutting and shaping apparatus as defined in the preamble of claim 1.

The nearest prior art is disclosed in patent US 3,724,251. In the apparatus of this patent for smoothing the edge corners of a plurality of metal strips advancing side by side, pairs of upper and lower roll means are spaced across the strip path at the strip edge localities and are provided with slightly tapered roll surfaces for rolling engagement of their surfaces with the strip edge corners whereby sharp corners and other burrs are rolled below the sheet surface planes.

In the treatment of sheet metal, various cutting and shaping apparatus are generally used in which the machining components may consist of e.g. discoid or bar-like machining tools. These apparatus have been designed to form grooves or patterns of desired shape in sheet metal by bending and stretching. The purpose of the shaping may be e.g. to stiffen the sheet or to produce a suitable shape for a joint between two parts made of sheet material. Especially thin sheets are used as insulation sheeting to protect insulating material against external stresses. For example, insulated pipes are provided with pre-machined sheet metal casings, which are manufactured as prefabricated parts of given lengths. These sheet metal tubes are provided with suitably shaped grooves needed for an overlapping joint to be made between tube ends. The grooves at the ends of the prefabricated tube are so shaped that the groove at one end has e.g. a concave shape designed to remain inside another tube while the groove at the other end has e.g. a convex shape designed to remain on the outside. In connection with the installation of piping, the sheet metal tubes have to be cut to lengths corresponding to the pipe sections to be insulated and a joint grooving has to be prepared in the region of the cut. The cutting is performed using e.g. a cutting wheel or some other tool applicable for cutting. The joint grooving is prepared using a tool designed for grooving. Normally, the waste piece left over remains unused.

The object of the invention is to disclose a sheet metal cutting and shaping apparatus that allows simultaneous mechanical cutting and shaping of insulating casing sheets, especially casing sheet metal used to form a casing on pipes. The apparatus of the invention shapes the flanges created in conjunction with cutting and thus forms joint grooves on both pieces produced via the cutting operation. In this text, 'flange' refers to an area at the edge of a sheet, typically having a width of 1-15 cm from the edge.

As for the features characteristic of the present invention, reference is made to the claims.

The invention provides an apparatus for cutting and shaping sheet metal. Said apparatus has an input side, from where a metal sheet is fed into the apparatus, and an output side, from where the cut and shaped metal sheet is received from the apparatus. The apparatus comprises a sheet metal cutting device for cutting the metal sheet into two parts, a first part and a second part, and a shaping device for shaping the flanges produced in the sheet as it is cut. Said shaping device is disposed after the cutting device, on its output side and the cutting device is arranged to direct the flange produced in the cutting operation into the gap between the wheels. The shaping device comprising two pairs of motorized wheels; first wheels and second wheels, a pair of wheels for the flange of each part each pair of wheels comprising a first wheel and a second wheel, mounted with their circumferences against each other. According to the invention the circumference of the first wheel is of a convex form while the circumference of the second wheel has a corresponding concave form so that the wheels shape the flanges and forms joint grooves on flanges of both parts (5,6) produced via the cutting operation.

A cutting device according to an embodiment of the invention consists of a motorized plunger and a counterpart inside which the plunger partially fits, this plunger being disposed above that area of the metal sheet where a cut is to be made while the counterpart is correspondingly placed below the aforesaid area of the metal sheet. The plunger is so motorized that it moves in a reciprocating manner, knocking pieces off the metal sheet into the counterpart while the metal sheet is simultaneously advancing, a cut of a width corresponding to the plunger width being thus made in the metal sheet, which is thus cut into two parts.

In the following, the invention will be described in detail by the aid of a few examples of its embodiments with reference to the attached drawings, which illustrate an embodiment of the apparatus of the invention.

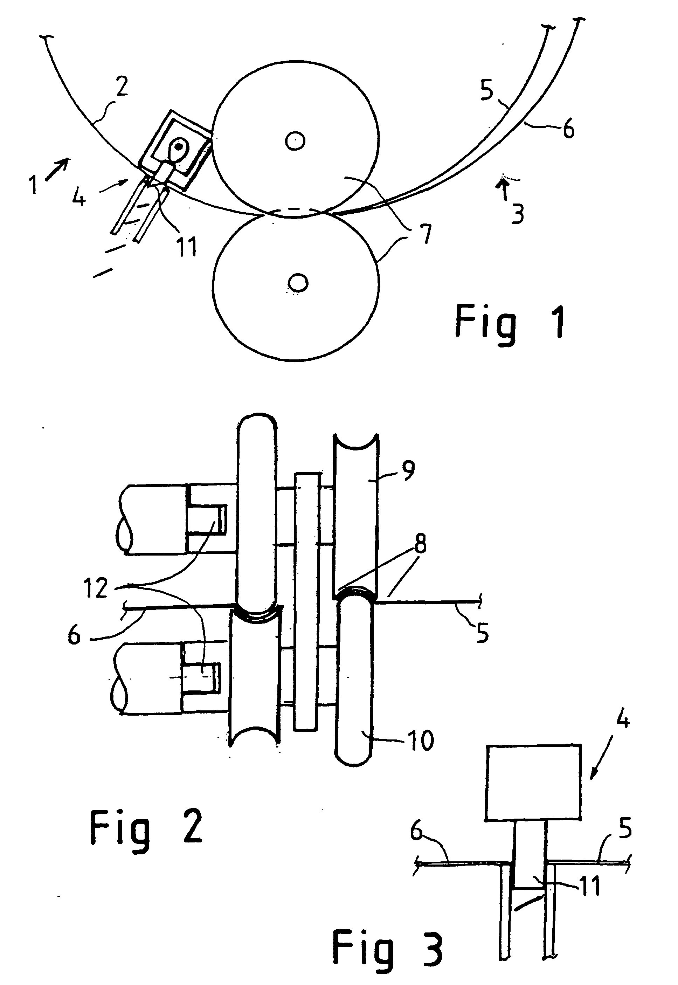

Fig. 1 represents an embodiment of the apparatus of the invention as seen from a direction transverse to the direction of advance of the metal sheet,
Fig. 2 represents the shaping device of the apparatus illustrated in Fig. 1 as seen in the direction of advance of the metal sheet,
Fig. 3 represents the cutting device of the apparatus illustrated in Fig. 1 as seen from the direction of advance of the metal sheet.

In the embodiment of the apparatus illustrated in the drawings, the apparatus comprises a cutting device 4 and a shaping device 7, of which the cutting device 4 is disposed on the input side 1 while the shaping device 7 is placed on the output side 3 of the apparatus. The sheet metal 2 is supplied from the input side 1 of the apparatus, so it will encounter the cutting device 4, which makes in the metal sheet 2 a cut dividing the sheet into a first part 5 and a second part 6. After being thus divided into two parts, the metal sheet encounters the shaping device 7, which comprises a first wheel 9 and a second wheel 10, the flange 8 of the part being directed into the gap between these wheels. At least one of the wheels is motorized. The circumferences of the wheels have been so shaped that they will shape the flange 8 into the desired form. According to the present embodiment of the invention, a moving force is transmitted to the metal sheet 2 via the wheels 9 and/or 10 of the shaping device 7. According to the invention, the circumferences of the wheels may have e.g. a convex, concave, v-shaped or any other form, depending on the shape to be given to the flange 8. However, the circumference of one of the wheels has a form designed to fit the circumference of the other one, e.g. so that one of the wheels has a v-shaped circumference while the other one has a A-shaped circumference. The moving force can also be transmitted to the sheet 2 e.g. using power gears, or by any known method.

According to an embodiment of the invention, the shaping device 7 is coupled to the rest of the apparatus by means of a push-pull coupling 12, making it possible to use shaping devices 7 of different types and sizes when sheet metal tubes 2 or sheets 2 of different types and sizes are to be cut and shaped. The push-pull coupling 12 may consist of any known push-pull coupling, e.g. a sleeve joint or a cotter joint. However, the push-pull coupling is of a design allowing the wheels of the shaping device 7 to be easily and quickly replaced with a wheel pair of a different type or size.

According to an embodiment of the invention, the first wheel 9 and the second wheel 10 of the shaping device 7 differ from each other in respect of diametric size; according to another preferred embodiment of the invention, the first wheel 9 and the second wheel 10 of the shaping device 7 are adjusted to rotate at different speeds, so that when a straight sheet is being shaped, it will be possible, by varying the rotational speed or the size of the wheels, to form from the straight sheet 2 sheets and/or tubes having different curvatures.

According to the invention, the shaping device 7 has a pair of wheels for each flange 8 produced as the sheet is being cut.

In the embodiment of the invention illustrated in the drawings, the cutting device consists of a cylinder and a plunger with a cutter 11, the plunger being motorized and arranged to knock pieces off the moving metal sheet 2 against the cylinder and thus to produce in the metal sheet 2 a cut that divides it into two parts 5, 6. According to the invention, the cutting device 4 may be any known type of cutting device. For example, the cutting device 4 may consist of a cutting wheel, a circular cutter, an abrasive water jet device or a laser or flame cutting device.

According to an embodiment of the invention, the cutting device 4 comprises a cutting wheel disposed between the first wheels 9 of the first and second wheel pairs, in which case the actual cutting takes place almost at the same point as the shaping.

The apparatus of the invention may additionally comprise e.g. jigs serving to force the metal sheet 2 being shaped into a desired curvature. According to the invention, the motorization of the cutting device 4 and shaping device 7 may be implemented in any manner; for example, the apparatus may only comprise a single motor, e.g. an electric motor, from which power is transmitted via a mechanical or hydraulic transmission to all devices needed. On the other hand, each device or part of the apparatus may be provided with a separate motor.

## Claims

1. Apparatus for cutting and shaping sheet metal, said apparatus having an input side (1), from where a metal sheet (2) is fed into the apparatus, and an output side (3), from where the cut and shaped metal sheet is received from the apparatus, the apparatus comprising a sheet metal cutting device (4) for cutting the metal sheet into two parts, a first part (5) and a second part (6), and a shaping device (7) for shaping the flanges (8) produced in the sheet as it is cut, said shaping device (7) being disposed after the cutting device (4), on its output side (3) and the cutting device being arranged to direct the flange (8) produced in the cutting operation into the gap between the wheels, the shaping device (7) comprising two pairs of motorized wheels; first wheels (9) and second wheels (10), a pair of wheels for the flange (8) of each part (5 and 6), each pair of wheels comprising a first wheel (9) and a second wheel (10) mounted with their circumferences against each other, **char- acterized in that** the circumference of the first wheel is of a convex form while the circumference of the second wheel has a corresponding concave form so that the wheels shape the flanges and forms joint grooves on flanges of both parts (5,6) produced via the cutting operation.

2. Sheet metal cutting and shaping apparatus as defined in claim 1, **characterized in that** the rotational speeds of the first (9) and second (10) wheels of the shaping device (7) can be adjusted.

3. Sheet metal cutting and shaping apparatus as defined in claim 1 or 2, **characterized in that** the cutting device (4) comprises one or more motorized cutters (11) arranged to cut out a strip from the sheet metal (2) between the first part (5) and the second part (6).

## Patentansprüche

1. Vorrichtung zum Schneiden und Formen von Metallblech, wobei die Vorrichtung eine Eingangsseite (1), von der ein Metallblech (2) in die Vorrichtung zugeführt wird, und eine Ausgangsseite (3), von der das geschnittene und geformte Metallblech von der Vorrichtung empfangen wird, aufweist, wobei die Vorrichtung eine Metallblech-Schneidvorrichtung (4) zum Schneiden des Metallblechs in zwei Teile, einen ersten Teil (5) und einen zweiten Teil (6), und eine Formungsvorrichtung (7) zum Formen der Flansche (8), die im Blech erzeugt werden, wenn es geschnitten wird, umfaßt, wobei die Formungsvorrichtung (7) nach der Schneidvorrichtung (4) auf ihrer Ausgangsseite (3) angeordnet ist und die Schneidvorrichtung angeordnet ist, um den im Schneidvorgang erzeugten Flansch (8) in den Spalt zwischen den Rädern zu richten, wobei die Formungsvorrichtung (7) zwei Paare von motorisierten Rädern; erste Räder (9) und zweite Räder (10), ein Paar von Rädern für den Flansch (8) von jedem Teil (5 und 6), umfaßt, wobei jedes Paar von Rädern ein erstes Rad (9) und ein zweites Rad (10) umfaßt, die mit ihren Umfängen gegeneinander montiert sind, **dadurch gekennzeichnet, daß** der Umfang des ersten Rades eine konvexe Form aufweist, während der Umfang des zweiten Rades eine entsprechende konkave Form aufweist, so daß die Räder die Flansche formen und Verbindungsnuten an den Flanschen beider Teile (5, 6), die über den Schneidvorgang erzeugt werden, ausbilden.

2. Metallblech-Schneid- und Formungsvornchtung nach Anspruch 1, **dadurch gekennzeichnet, daß** die Drehzahlen des ersten (9) und des zweiten (10) Rades der Formungsvorrichtung (7) eingestellt werden können.

3. Metallblech-Schneid- und Formungsvorrichtung nach Anspruch 1 oder 2, **dadurch gekennzeichnet, daß** die Schneidvorrichtung (4) eine oder mehrere motorisierte Schneideinrichtungen (11) umfaßt, die zum Ausschneiden eines Streifens aus dem Metallblech (2) zwischen dem ersten Teil (5) und dem zweiten Teil (6) angeordnet ist/sind.

## Revendications

1. Appareil de coupe et de mise en forme de feuille métallique, ledit appareil ayant un côté d'entrée (1), depuis lequel une feuille métallique (2) est insérée dans l'appareil, et un côté de sortie (3), depuis lequel la feuille métallique coupée et mise en forme est reçue de l'appareil, l'appareil comprenant un dispositif de coupe de feuille métallique (4) permettant de couper la feuille métallique en deux parties, une première partie (5) et une seconde partie (6), et un dispositif de mise en forme (7) permettant de mettre en forme les rebords (8) produits dans la feuille au fur et à mesure qu'elle est coupée, ledit dispositif de mise en forme (7) étant agencé après le dispositif de coupe (4), sur son côté de sortie (3), et le dispositif de coupe étant agencé de manière à diriger le rebord (8) produit lors de l'opération de coupe dans l'intervalle entre les roues, le dispositif de mise en forme (7) comprenant deux paires de roues motorisées ; des premières roues (9) et des secondes roues (10), une paire de roues pour le rebord (8) de chaque partie (5 et 6), chaque paire de roues comprenant une première roue (9) et une seconde roue (10) montées avec leurs circonférences l'une contre l'autre, **caractérisé en ce que** la circonférence de la première roue est de forme convexe alors que la circonférence de la seconde roue a une forme concave correspondante, de sorte que les roues mettent en forme les rebords et forment des rainures de raccord sur les rebords des deux parties (5, 6) produites via l'opération de coupe.

2. Appareil de coupe et de mise en forme de feuille métallique tel que défini dans la revendication 1, **caractérisé en ce que** les vitesses de rotation des première (9) et seconde (10) roues du dispositif de mise en forme (7) peuvent être ajustées.

3. Appareil de coupe et de mise en forme de feuille métallique tel que défini dans la revendication 1 ou 2, **caractérisé en ce que** le dispositif de coupe (4) comprend une ou plusieurs fraises motorisées (11) arrangées de manière à découper une bande de la feuille métallique (2) entre la première partie (5) et la seconde partie (6).
